# EUROPÄISCHE PATENTANMELDUNG

(11) **EP 0 732 825 A2**
(43) Veröffentlichungstag der Anmeldung: **18.09.1996**
(21) Anmeldenummer: 96103202.6
(22) Anmeldetag: 01.03.1996
(51) Int. Cl.: H04J 3/14

(54) **Verfahren zur Synchronisation von Zeitintervallen**

(30) Priorität: 16.03.1995 DE 19509600
(71) Anmelder: SIEMENS AKTIENGESELLSCHAFT, 80333 München (DE)
(72) Erfinder: Drews, Wolfgang, Dr.-Ing., 82194 Gröbenzell (DE)

(57) **Zusammenfassung**

Verfahren zur Synchronisation von in Peripherie-Baugruppen erzeugten Zeitintervallen auf ein im Zentralrechner erzeugtes Grundzeitintervall im Rahmen einer vorgegebenen zeitlichen Toleranzabweichung, wobei eine lückenlose Erfassung von Performance-Ereignissen von PDH, SDH-Signalen auf verteilten Gerätekomponenten durchgeführt wird. Das Verfahren ist für eine Gerätearchitektur aus zentralem Steuerrechner und einzelnen Slave-Baugruppen ausgelegt.

## Beschreibung

Zur Qualitätsüberwachung von Übertragungsstrecken für Nachrichtensignale der plesiochronen und synchronen Digitalen Hierarchie (PDH/SDH) sind nach den geltenden Normen ITU-T M2100, M2120, G.784, G.783 und ETSI pr ETS 300417-1 in den jeweiligen Übertragungsgeräten sogenannte Performance-Monitoring-Funktionen vorzusehen. Diese bestehen im wesentlichen darin, aus Signalübertragungsfehlern und Bitfehlern bestimmte Performance-Ereignisse abzuleiten und diese innerhalb von Zeitintervallen zusammenzufassen. Nach geltenden Empfehlungen, insbesondere nach den ITU-T-Empfehlungen G.784 sowie ETSI pr ETS 30041 sind Zeitintervalle von 15 Minuten und 24 Stunden vorgesehen.

Die dabei zu überwachenden Signale und deren Überwachungssensoren sind je nach Komplexität des Übertragungsgerätes auf eine Vielzahl von Baugruppen verteilt. Hierbei tritt die Schwierigkeit auf, daß zur zeitlichen genauen Erfassung der Performance-Ereignisse ein hoher gerätetechnischer Aufwand notwendig ist. Eine exakte Synchronisation der Zeitintervalle auf allen Baugruppen mit Hilfe eines zentralen Zeittaktsignals würde bedeuten, daß zusätzliche Verbindungsleitungen zwischen den Baugruppen bereitgestellt und gesteuert werden müßten. Darüber hinaus würde bei einer festen Zeitkopplung ein weiterer hoher Aufwand an Synchronisationsmaßnahmen notwendig sein, wenn die zeitliche Lage der Zeitintervalle in bezug auf die Uhrzeit vom Betreiber frei wählbar sein soll.

Aufgabe der Erfindung ist es, ein einfaches Verfahren zur Synchronisation von Zeitintervallen für ein Performance-Monitoring auf peripheren Baugruppen anzugeben, das ohne Verwendung zentraler Steuersignale auskommt.

Die Aufgabe wird durch die Merkmale des Patentanspruchs 1 gelöst.

Die Erfindung bringt den Vorteil mit sich, daß für die Synchronisation keinerlei Aufwand in Hardware und Software für den zentralen Steuerrechner erforderlich ist.

Das Verfahren bringt den weiteren Vorteil mit sich, daß der Steuerrechner nicht durch hohe Datenkommunikation zwischen Peripheriebaugruppe und Zentraleinheit überlastet wird.

Die Erfindung bringt den Vorteil mit sich, daß durch die Synchronisation der peripheren Baugruppen stets eine zeitliche Zuordnung der ermittelten Qualitätsdaten und damit auch deren Interpretierbarkeit für Fehleranalysen gegeben ist.

Das Verfahren bringt den weiteren Vorteil mit sich, daß die zeitliche Lage der 15-Minuten-Zeitintervalle in Bezug auf die Uhrzeit vom Betreiber frei wählbar ist.

Weitere Besonderheiten der Erfindung werden aus der nachfolgenden näheren Erläuterung eines Ausführungsbeispiels anhand von Zeichnungen ersichtlich.

Es zeigen:
- Fig. 1: eine Architektur eines Überwachungssystems,
- Fig. 2: ein Funktionsdiagramm für Performance-Messungen auf einer Peripheriebaugruppe sowie
- Fig. 3: einen Synchronisationsmechanismus für X-Minutenintervalle zwischen Peripheriebaugruppen und einer zentralen Steuereinheit.

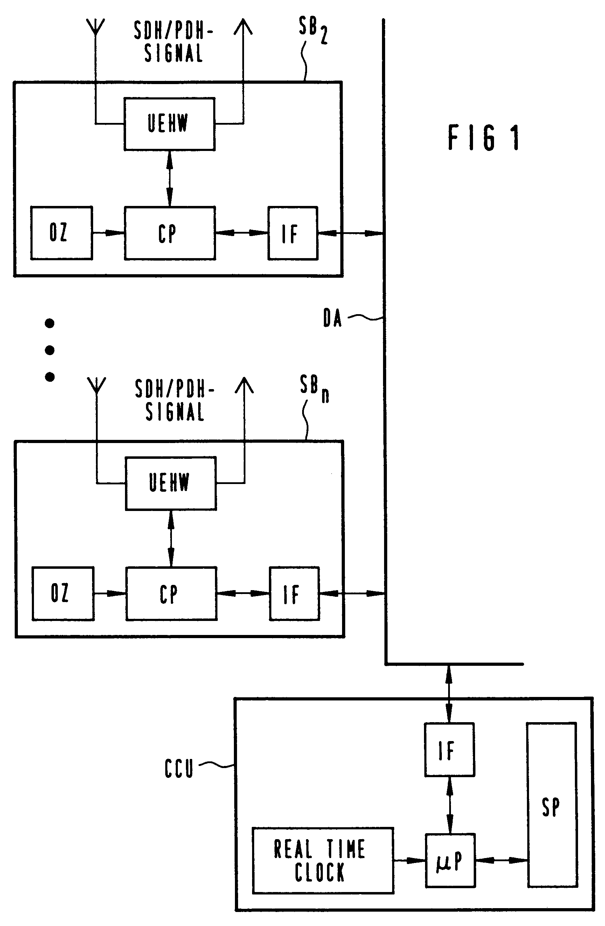

In der Figur 1 ist schematisch die Architektur einer geräteinternen Überwachung von Peripheriebaugruppen dargestellt. Diese Architektur besteht aus einem zentralen Steuerrechner CCU der über einen Datenbus DA mit einer Mehrzahl von prozessorgesteuerten Peripheriebaugruppen SBn (Slave-Baugruppen oder Peripherieeinheit) verbunden ist. Diese Architektur tritt beispielsweise bei typischen Realisierungsformen von Übertragungsgeräten der Synchronen Digitalen Hierarchie (SDH) auf. In jeder Peripheriebaugruppe SBx, die am Performance-Monitoring beteiligt ist, werden jeweils Performance-Ereignisse innerhalb aufeinanderfolgender Zeitintervalle Z2(n), n=1, 2, 3, ..., von beispielsweise 15 Minuten ermittelt. Die Dauer des Zeitintervalls Z2(n) wird aus einem lokalen Taktoszillator OZ abgeleitet, der auf der Peripheriebaugruppe SBn zum Betrieb des Mikroprozessors ohnehin vorhanden ist. Nach jedem Zeitintervall Z2(n) werden die Performance-Ereignisse, die in Form von Zählwerten PZ auf einer Peripheriebaugruppe SBx vorliegen, auf Abfrage an den Steuerrechner CCU übertragen. Dort werden die Zählwerte PZ zu Datensätzen zusammengefaßt und mit Zeitstempeln versehen und in einer Speichereinheit SP des Steuerrechners abgespeichert. Weiterhin werden die Zählwerte in Zeitintervallen von 24 Stunden durch den Steuerrechner aufsummiert, dies ist jedoch nicht Gegenstand der weiteren Betrachtungen.

Die Synchronisation der Start- und/oder Endezeitpunkte der 15-Minuten-Zeitintervalle Z2(n) auf den einzelnen Peripheriebaugruppen SBn erfolgt jeweils zu den 15-Minuten-Abfragezeitpunkten RE des zentralen Steuerrechners CCU. Diese 15-Minuten Abfragezeitpunkte stellen ein Grundzeitintervall oder Referenzzeitintervall Z1 dar. Der zentrale Steuerrechner CCU setzt die Abfragezeitpunkte RE näherungsweise gleichzeitig für alle Peripheriebaugruppen SBn, jeweils zum Ende aufeinanderfolgender 15-Minuten-Grundzeitintervalle Z1(n), mit n=1, 2, 3,..., deren Beginn - und Endzeitpunkt mit Hilfe einer Echtzeituhr vom Steuerrechner CCU bestimmbar sind. Diese Grundzeitintervalle können in Bezug auf die Echtzeit vom Betreiber jederzeit eingestellt bzw. korrigiert werden. Danach erfolgt eine Synchronisation der Zeitintervalle Z2(n) auf das vom Steuerrechner CCU ausgesandte Abfragesignal RE.

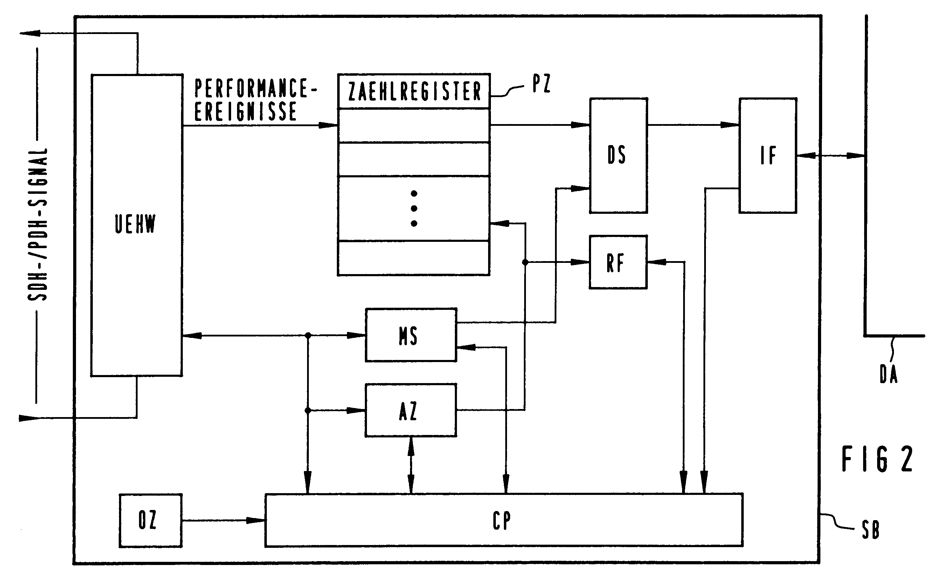

Das Funktionsdiagramm für Performance-Messungen, wie in Figur 2 dargestellt, ist für eine Hardware- als auch für eine Softwareimplementierung gleichermaßen geeignet. Nachfolgend wird dieses Funktionsdiagramm in Zusammenhang mit dem Synchronisationsverfahren beschrieben, wobei die Funktionen einer Peripheriebaugruppe SBx zur Erfassung von Performance-Ereignissen innerhalb von 15-Minuten-Zeitintervallen Z2(n) betrachtet werden. Während dieser 15-Minuten-Zeitintervalle Z2(n) werden bei den über die Peripheriebaugruppen SBn geführten und überwachten SDH-/PDH-Signalen verschiedene Defekte (z.B. Signalwertunterbrechung) und Übertragungsbitfehler innerhalb der Überwachungs-Hardware ÜHW erkannt und in 1-Sekunden-Registern als Performance-Ereignisse zwischengespeichert. Der 1-Sekunden-Takt wird hierbei von dem lokalen Oszillator OZ der Baugruppe erzeugt.

Auf der Basis der einzelnen 1-Sekunden Performance-Ereignisse wird je Performance Ereignistyp dessen Auftrittshäufigkeit PZ innerhalb des n-ten 15-Minuten-Zeitintervalls Z2(n) aufsummiert. Neben den Zählern PZ für die Performance-Ereignisse ist ein weiterer Zähler MS ("Monitored Seconds") für die bisherige Beobachtungszeit in Sekunden innerhalb eines Zeitintervalls Z2(n) vorgesehen.

Der Ablauf des Performance Monitoring geschieht nun wie folgt:

Im Grundzustand nach Einschalten der Baugruppe SBx werden keine Performance-Daten erfaßt und alle Zähler sind auf Null initialisiert. Durch den Startbefehl ST des zentralen Steuerrechners CCU wird das Performance-Monitoring auf einer Peripheriebaugruppe SBx gestartet und alle erkannten Performance-Ereignisse PZ werden ab sofort gezählt. Zur Festlegung des normalen Endezeitpunktes eines 15-Minuten-Zeitintervalls Z2(n) wird zur Startzeit der Ablaufzähler AZ auf den Wert 900 initialisiert und fortan im Sekundentakt dekrementiert. Erreicht der Ablaufzähler AZ den Wert 0, so ist hiermit das Ende des 15-Minuten-Zeitintervalls Z2(n) angezeigt und die bis dahin ermittelten Performance-Zählwerte PZ werden zu einem Datensatz DS zusammengefaßt und zwischengespeichert. Das Vorhandensein eines vollständigen Datensatzes DS wird durch ein READY-Flag RF vermerkt. Gleichzeitig beginnt das nächste 15-Minuten-Zeitintervall, wobei der Ablaufzähler AZ zuvor wiederum mit 900 und die Zähler PZ mit 0 initialisiert werden. Der abgespeicherte, zum zuvor abgelaufenen Zeitintervall Z2(n-1) benötigte Performance-Datensatz DS wird nach Abfrage durch den Befehl REQUEST RE des zentralen Steuerrechners CCU an diesen weitergegeben und anschließend das READY-Flag RF gelöscht.

Aufgrund der lokalen, nicht synchronen Taktquellen für die 1-Sekunden-Takte der einzelnen Slave-Baugruppen SBn gegenüber der Echtzeituhr des Steuerrechners CCU kommt es zu einem zunehmenden Zeitversatz zwischen den Start- und Endzeitpunkten der Zeitintervalle Z2(n) bezüglich der durch den zentralen Steuerrechner CCU jeweils vorgegebenen Grundzeitintervalle Z1(n).

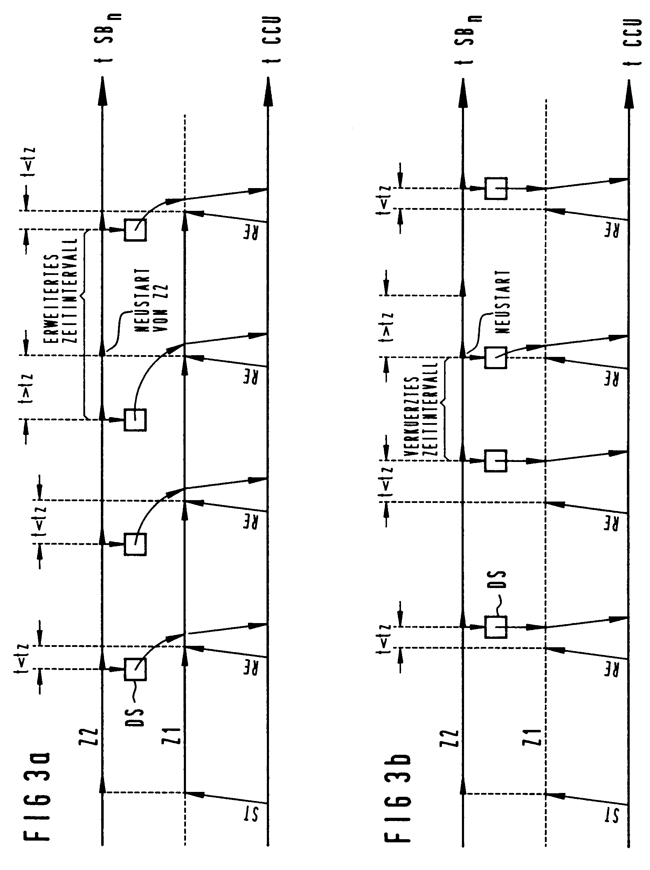

Zur Synchronisation der Zeitintervalle Z2(n) einer Peripheriebaugruppe SBn auf die Zeitintervalle Z1(n)(Grundzeitintervall) des zentralen Steuerrechners CCU wird, wie in Figur 3 dargestellt, folgendes Verfahren angewendet:
Fall a: Die "15-Minuten-Zeitintervalle" Z2(n) auf der Peripheriebaugruppe SBx sind kürzer als die vom Steuerrechner CCU vorgegebenen Zeitintervalle Z1(n):
   In diesem Fall laufen die Zeitintervalle Z2(n) auf der Peripheriebaugruppe SBx zunehmend schon vor Abfrage durch den Steuerrechner CCU ab. Eine Synchronisation des Zeitintervalls Z2(n) auf das von dem Steuerrechner CCU vorgegebene Zeitintervall Z1(n) wird immer dann ausgelöst, wenn der Befehl REQUEST RE außerhalb des Zeitintervalls Z2(n) nach einer Toleranzzeit tz erhalten wird (Ablaufzählerstand AZ ≦ 900-tz) für das bereits seit > tz Sekunden begonnen, neue Zeitintervalle Z2(n+1) und der zum vorhergehenden Zeitintervall Z2(n-1) gehörige Performance-Datensatz DS noch nicht abgeholt wurde (READY-Flag RF gesetzt). Hierbei wird zunächst der gespeicherte Performance-Datensatz DS an den Steuerrechner CCU wie im Normalfall nach dem Anforderungssignal RE an den Zentralrechner gesendet (READY-Flag RF wird gelöscht). Der Ablaufzähler AZ für das bereits begonnene, neue Zeitintervall Z2(n+1) wird jedoch auf 900 zurückgesetzt, wodurch eine Synchronisation des Zeitintervalls Z2(n+1) auf das Anforderungssignal RE erzielt wird. Die bereits vor Rücksetzung des Ablaufzählers ermittelten Performance-Zählerwerte für Z2(n+1) werden nicht verworfen, so daß das Zählintervall Z2(n+1) bei normalen Ablauf nach 900 s insgesamt eine Zähldauer MS ("monitored Seconds") von 900 + tz Sekunden beinhaltet.
Fall b: Die 15-Minuten-Zeitintervalle Z2(n) auf der Peripheriebaugruppe SBn sind länger als die vom Steuerrechner CCU vorgegebenen Zeitintervalle Z1(n) (Fig. 3b):
   In diesem Fall laufen die Zeitintervalle Z2(n) auf der Peripheriebaugruppe SBn zunehmend erst nach Erhalt des REQUEST-Befehls RE durch den Steuerrechner CCU ab. Dies bedeutet, daß der zugeordnete Performance-Datensatz DS zum Abfragezeitpunkt noch nicht vorliegt und erst nach Ablauf des aktuellen Zeitintervalls Z2(n) an den Steuerrechner CCU gesendet werden kann. Eine Synchronisation wird immer dann ausgelöst, wenn die Zeitdifferenz zwischen Erhalt des Befehls REQUEST RE und dem regulären Endzeitpunkt von Z2(n) die vorgebbare Toleranzzeit tz überschreitet (Erkennung bei Ablaufzählerstand > tz) und noch kein Performance-Datensatz DS bereit liegt (READY-Flag RF nicht gesetzt). Hierbei wird das laufende Zeitintervall Z2(n) vorzeitig beendet, indem die aktuellen Performance-Zählwerte PZ(n) unmittelbar zum Datensatz DS zusammengefaßt und an den Steuerrechner CCU gesendet werden(READY-Flag RF wird nicht gesetzt). Die tatsächliche Anzahl gezählter Sekunden MS ("Monitored Seconds") für Z2(n) besitzt dann den Wert 900-tz. Anschließend wird ein neues Zeitintervall Z2(n+1) durch Setzen des Ablaufzählers AZ auf 900 und Rücksetzen der Performance-Zählwerte PZ und des Zählers MS auf Null gestartet.

Durch dieses Verfahren wird ein automatisches Synchronisieren der 15-Minuten-Zeitintervalle Z2(n) einer Slave-Baugruppe SBx auf die Abfragezeitpunkte des zentralen Steuerrechners CCU erzielt, wobei ein maximaler Zeitversatz zwischen Z1(n) und Z2(n) von +/- tz Sekunden auftreten kann. Bei Verstellung der Uhrzeit des Steuerrechners CCU wird automatisch eine Synchronisation der Zeitintervalle Z2(n) auf den Slave-Baugruppen SBn beim ersten Abfragezeitpunkt durch den REQUEST-Befehl RE erreicht.

Entsprechendes gilt auch bei Änderung der zeitlichen Lage der gewünschten Beobachtungszeitintervalle Z1(n) in Bezug auf die Uhrzeit durch den Anwender.

Nachfolgend sind die Bedeutungen für die in den Figuren verwendeten Abkürzungen zusammenfassend angegeben.

SBn: Periphere Baugruppe Nr. n; CCU: Zentraler Steuerrechner; ÜHW: Überwachungs-Hardware für SHD/PDH-Signal auf peripherer Baugruppe; CP: Steuerprozessor auf peripherer Baugruppe; µP: Mikroprozessor auf CCU; OZ: lokaler Taktoszillator auf peripherer Baugruppe; DA: Datenbus zwischen peripheren Baugruppen und CCU; IF: Interface für Datenbus DA; SP: Speicher für Performance-Datensätze auf CCU; PZ: Akkumulierende Register für Performance-Zählwerte; DS: Datensatz mit Performance-Zählwerten; RF: Ready-Flag für Vorhandensein eines Datensatzes DS; MS: Zählwertregister für bisherige Meßzeit innerhalb eines Zeitintervalls Z2 und AZ: Ablaufzähler für Zeitintervall Z2.

## Patentansprüche

1. Verfahren zur Synchronisation von in Peripherieeinheiten (SBx) erzeugten Zeitintervallen (Z2(n)) mit von einer Zentraleinheit (CCU) erzeugten Grundzeitintervallen (Z1n), bei dem in jeder der Peripherieeinheit (SBx) nach einer Initialisierung (ST) durch den Zentralrechner (CCU) fortlaufend aufeinanderfolgende Zeitintervalle (Z2(n)) gebildet werden,
daß im Abstand von Grundzeitintervallen (Z1(n)) vom Zentralrechner (CCU) ein Abfragesignal (RE) zur Peripherieeinheit (SBx) übertragen wird,
daß die Zeitdauer zwischen dem Abfragesignal (RE) und dem Ende des Zeitintervalls (Z2(n)) in jeder der Peripherieeinheit (SBx) ermittelt wird und
daß bei Überschreiten einer vorgebbaren Toleranzzeit (tz) ein neues Zeitintervall (Z2(n+1)) in der Peripherieeinheit (SBx) begonnen wird.

2. Verfahren nach Anspruch 1,
dadurch gekennzeichnet
daß während der in den Periherieeinheiten (SBx) erzeugten Zeitintervalle (Z2(n)) jeweils ein Datensatz (DS), der die Häufigkeit von Performance-Ereignissen wiedergibt, gebildet wird, und am Ende der Zeitintervalle (Z2(n)) durch ein Ready-Flag (RF) abgeschlossen wird.

3. Verfahren nach einem der vorhergehenden Ansprüche,
dadurch gekennzeichnet,
daß der Datensatz (DS) durch das Anforderungssignal (RE) zur Zentraleinheit (CCU) übermittelt und in einer Speichereinheit (SP) der Zentraleinheit (CCU) zwischengespeichert wird.

4. Verfahren nach einem der vorhergehenden Ansprüche,
**dadurch gekennzeichnet**,
daß bei Beendigung eines Zeitintervalls vor einem Abfragezeitpunkt und außerhalb der Toleranzzeit, der durch das Anforderungssignal (RE) von der Zentraleinheit (CCU) vorgegeben wird, der fertig gestellte Datensatz (Ds) durch dieses Anforderungssignal (RE) abgerufen wird,
daß die bis zum Zeitpunkt des Anforderungssignals (RE) abgespeicherten Daten (PZ) eines folgenden Zeitintervalls (Z2(n+1)) sowie dessen begonnene Zeitdauer (Z2(n+1)) bis zum Abfragezeitpunkt des Anforderungssignals (RE) in der Peripherieeinheit (SBx) zwischengespeichert werden,
daß das bereits begonnene Zeitintervall Z2(n+1) erneut durch das Anforderungssignal (RE) gestartet wird, wobei die die bisherigen Performance-Zählwerte (PZ) erhalten bleiben und zu den Zählwerten des neu gestarteten Zeitintervalls Z2(n+1) hinzuaddiert werden und bei Eintreffen des nächsten Anforderungssignals abgerufen werden.

5. Verfahren nach einem der vorhergehenden Ansprüche,
**dadurch gekennzeichnet**,
daß bei einem Abfragezeitpunkt vor Beendigung eines Zeitintervalls und außerhalb der Toleranzzeit ein noch andauerndes Zeitintervall (Z2(n)) gestoppt wird und
daß die bis dahin ermittelten Daten (PZ) mit der dazugehörige Zeitdauer in einem Datensatz (DSn) zusammengefaßt und an den Zentralrechner (CCU) übertragen werden.

6. Verfahren nach einem der vorhergehenden Ansprüche,
**dadurch gekennzeichnet**,
daß das auf der Peripherieeinheit(SB) gebildete Zeitintervall (Z2) mit einer durch einen lokalen Prozessor gesteuerten Ablaufzählereinheit (AZ) gebildet wird.

7. Verfahren nach einem der vorhergehenden Ansprüche,
**dadurch gekennzeichnet**,
daß nach Abfrage des Datensatzes (DS) das Ready-Flag (RF) zurückgesetzt wird.

8. Verfahren nach einem der vorhergehenden Ansprüche,
**dadurch gekennzeichnet**,
daß die Dauer des Grundzeitintervalls (Z1) frei vorgebbar ist.

9. Verfahren nach einem der vorhergehenden Ansprüche,
**dadurch gekennzeichnet**,
daß die Dauer des Zeitintervalls (Z2) an das vorgegebene Grundzeitintervall (Z1) nach Maßgabe von Programmprozeduren anpaßbar ist.

10. Verfahren nach einem der vorhergehenden Ansprüche,
**dadurch gekennzeichnet**,
daß der Datensatz (DS) in unterschiedlichen Performance-Ereignissen zugeordneten Datentypen unterteilt ist.
